# EUROPEAN PATENT APPLICATION

(11) **EP 1 030 492 A1**
(43) Date of publication of application: **23.08.2000**
(21) Application number: 00301101.2
(22) Date of filing: 14.02.2000
(51) Int. Cl.: H04L 29/06

(54) **Apparatus and method for establishing communications**

(30) Priority: 19.02.1999 US 252637
(71) Applicant: Critical Path Inc., San Francisco, CA 94105 (US)
(72) Inventor: Volpe, Eric, San Francisco, CA 94103 (US); Simitzis, Stephen, San Francisco, CA 94110 (US); Correia, Wayne D., San Francisco, CA 94107 (US)
(74) Representative: Flint, Adam

(57) **Abstract**

A highly scalable and fault-tolerant internet application hosting system (100) uses a series of central communication points for connecting requests based on different session or transaction based protocols to different computers (400) capable of fulfilling those requests. The application hosting system (100) is able to receive requests from remotely located computers and relay those requests to servers (400) within the application hosting system (100) that represent a very great number of unique internet addresses.

## Description

The present invention relates to an apparatus and method for establishing communications.

The present invention has particular application to an architecture for Internet application hosting services, and, in a preferred embodiment, to an Internet application hosting architecture that is scalable, fault-tolerant and able to service various transaction protocols for a great many unique internet (IP) addresses through a series of central communication points, referred to herein as proxy hosts.

Network communication systems requiring large numbers of different remotely located computers to communicate with a central source have been known for a long time. Examples of such network communication systems abound. In such systems, it has long been desirable to have redundancy at the central source, and this is typically implemented by having a number of servers at the central source. Thus, when the remotely located computer attempts to connect to and communicate with the central source, the remotely located computer will communicate with any one of a number of different servers.

There are also known load balancing mechanisms for ensuring that in a network communication system of the type described above, the load on the various servers at the central source is maintained relatively even, such that the load on any one source computer is not too great. For example, US-A-5774660 describes previously known load sharing systems that operate using a multiplexer or router between each of the remotely located computers, termed "browser clients" in the patent, and the various servers that make up the central source, termed "server farm" in the patent. In the load sharing system then described as the invention of US-A-5774660, a "load balancer" receives packets from the browser clients, and the packets received from the browser clients contain a destination (local) IP address which is a virtual IP address of the load balancer. In operation, the server connected to the load balancer will use the browser's IP (remote) address for outgoing packets, but the virtual IP address as the source address of these packets. Outgoing packets do not go through the load balancer.

Another related concept, fault-tolerance, deals with the problem of what happens when one of the source computers fails. Different schemes are used to deal with this problem, such as the fault tolerant and load sharing processing system described in US-A-4577272.

While load balancing and fault tolerance are desired by the present invention, the systems such as described above are not particularly directed to applications encountered by the present invention, particularly in their ability to effectively partition and scale resources for many different internet addresses (domains).

The need exists for a system that allows services such as POP3, SMTP, HTTP, IMAP4, and LDAP, and others, to be commonly provided through a series of central communication points. The need also exists for the aforementioned services to be provided independently so that a customer's transactions and data are effectively partitioned from those of other customers. There is furthermore the need to have a single computer located at the central source appear to the various remotely located computers as many different internet addresses.

According to a first aspect of the present invention, there is provided apparatus for establishing internet communications using any of a plurality of predetermined protocols between any of a plurality of remote computers and one of a plurality of servers, said apparatus comprising: a communication interface for receiving incoming communications from the remotely located computers, each incoming communication being based on one of the plurality of different protocols; and, a processor capable of processing each of the incoming communications received by the communication interface, establishing a first connection with the remotely located computer associated with each connection, and establishing a second connection with one of a plurality of said servers, wherein the processor uses a different instantiation of software to process each incoming communication based upon a different one of the plurality of predetermined protocols so that for each incoming communication, further communications between said associated remotely located computer and said server can take place.

According to a second aspect of the present invention, there is provided a method of establishing a communication link between a remotely located computer and one of a plurality of service hosts using a proxy host, the method comprising the steps of: receiving an incoming communication from a remotely located computer at said proxy host; establishing a first connection between the remotely located computer and the proxy host; selecting one of a predetermined plurality of software instantiations to use to process each incoming communication based upon which one of a plurality of predetermined protocols each incoming communication is based upon; and, processing each incoming communication using said selected software instantiation to establish a second connection between the proxy host and one of the plurality of service hosts.

According to a third aspect of the present invention there is provided a method of establishing a communication link between a remotely located computer and one of a plurality of service hosts using a proxy host, the method comprising the steps of: receiving an incoming communication from a remotely located computer at said proxy host; establishing a first connection between the remotely located computer and the proxy host; determining whether an IP address associated with said incoming communication is supported, said step of determining comparing the IP address associated with said incoming communication to a plurality of predetermined local IP addresses; and, processing each incoming communication to establish a second connection between the proxy host and one of the plurality of service hosts, each of said plurality of services hosts having associated therewith only a singe IP address, each said single IP address being different from the plurality of predetermined local IP addresses.

In its preferred embodiment, the present invention provides a computer (herein referred to as a "proxy host") that is capable of relaying a plurality of different session or transaction based protocols. The computer is capable of relaying POP3, SMTP, HTTP, IMAP4, LDAP, and other protocols.

In its preferred embodiment, the present invention provides a plurality of computers (herein referred to as "service hosts") that are each capable of satisfying requests via a plurality of different session or transaction based protocols. This is achieved by providing a series of proxy hosts distributing requests among a pool of service hosts capable of satisfying those requests.

In a preferred embodiment, the proxy hosts maintain tables containing information regarding the operational status of the service hosts.

The above and other aspects, objects, features, and advantages of the present invention are further described in the detailed description which follows, with reference to the drawings by way of non-limiting exemplary embodiments of the present invention, wherein like reference numerals represent similar parts of the present invention throughout several views and wherein:
Fig. 1 illustrates an overview of an embodiment of the present invention;
Fig. 2 illustrates a functional diagram of an example of a proxy host according to the present invention;
Fig. 3 illustrates data tables used for load balancing according to an embodiment of the present invention; and,
Fig. 4 illustrates a flowchart of implementing a connection between a remotely located computer and a service host according to an embodiment of the present invention.

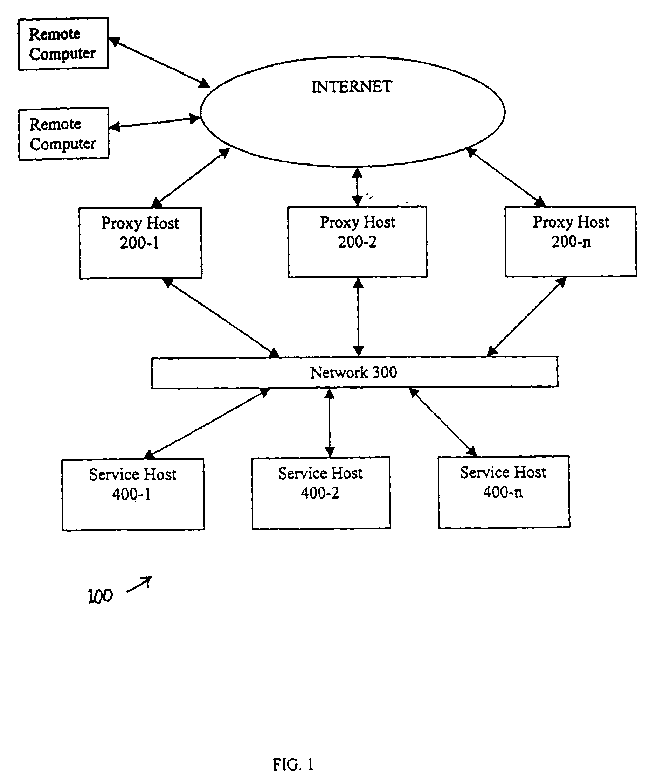

Fig. 1 illustrates an overview of an embodiment of the present invention. The service hosting system 100 preferably contains a plurality of proxy hosts 200, each of which is able to receive connections from remotely located computers on the internet. The proxy hosts 200 are also each separately connected to a private network 300, such as a LAN, which allows each of the proxy hosts 200-1 to 200-n to communicate with a plurality of service hosts 400-1 to 400-n, as will be described in further detail hereinafter.

Each of the proxy hosts 200 is implemented using a computer running a UNIX-based operating system providing TCP/IP networking and loaded with software that implements the functionalities described herein, which computer has, as is conventionally known, a processor, internal memory, communication interfaces, internal buses and other components. Each of the service hosts 400 is implemented using a computer running a UNIX-based operating system providing TCP/IP networking and loaded with software that implements the applications for each of the protocol functionalities described herein.

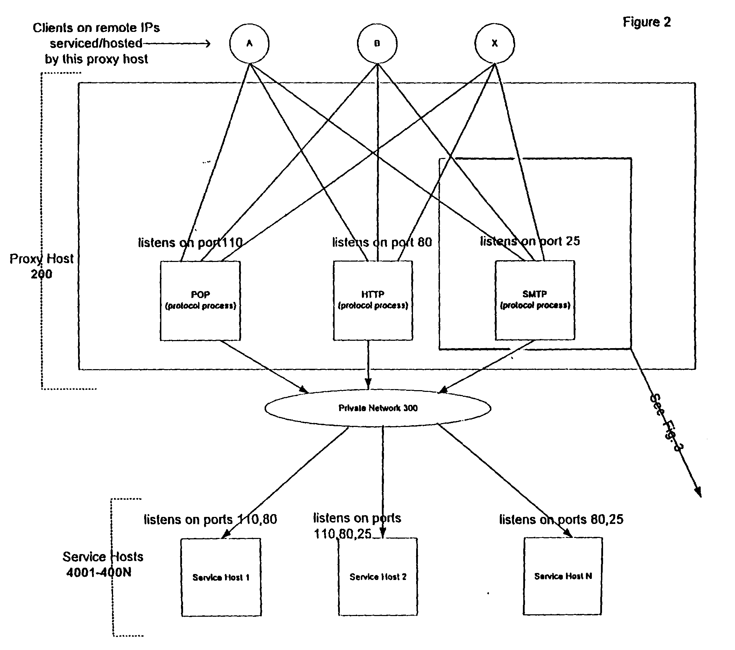

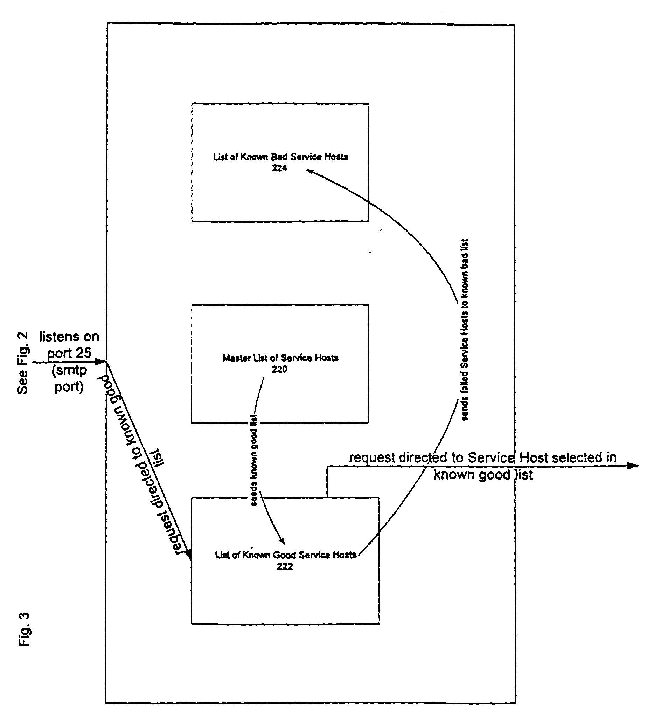

Fig. 2 illustrates a functional block diagram of logical components of a proxy host 200. The proxy host runs a UNIX-based operating system, under which instances of software run, each of which (called a proxy process) accepts an arbitrary number of connections on a particular logical port number. Ports are logical, not physical, entities. Each port number corresponds to a particular protocol (POP3= 110, SMTP=25, HTTP=80, etc.). On a specific proxy host computer, only one port (port #25 for instance) can accept connections on behalf of only one proxy process (in this example, the SMTP process). That port #25 can, however, accept many connections from remote client software. The proxy host 200 determines which proxy process to use based upon header information that is contained in each message, which header information identifies the logical port to be used. As illustrated in Fig. 2, logical ports 110, 80 and 25 are shown, which correspond to the logical ports for POP, HTTP and SMTP protocol processes, respectively.

Each of the various protocol processes preferably has associated therewith sets of service host 400 identification tables, there being one set of three identification tables for each protocol supported. Fig. 3 illustrates a functional diagram illustrating the set of three tables for the SMTP functional protocol process illustrated Fig. 2 and the associations that exist between the tables. These tables are also implemented for each of the other protocol processes, although it should be noted that if each of the service hosts 400 is capable of handling all of the protocol processes, only one set of three tables is needed.

As shown, each set of three tables includes one table that provides a master list 220 of service hosts 400, another table that provides a known good list 222 of service hosts 400, and the third table that provides a known bad list 224 of service hosts 400. The known good list 222 is a list of service hosts 400 that are known to be good, the known bad list 224 is a list of service hosts 400 that are not good at a moment in time, and the master is a master list of service hosts 400 that are available for connection.

These tables are used by each proxy process to determine which particular service host 400 is available to make a connection. This known list can be updated in two ways: from the master list 220, which can be manually updated by an administrator to add or delete a service host 400, and by automatically adding service hosts 400 that should no longer be on the known bad list 224. A service host is placed onto the known bad list when the proxy host 200 attempts to connect that particular service host 400 with the remotely located computer, but the connection cannot be made. Such a connection may fail for many reasons, for example, the particular service host 400 may be down for maintenance, may be fully used and not able to accept any new connections, or may be malfunctioning. After an administratively defined period of time, such as 20 seconds, the service host 400 that has been placed on the known bad list 224 will then be re-inserted onto the known good list 222.

It should also be noted that the master list 220 can be used to update the known good list 222 while the system 100 is operational. Accordingly, this allows for servers 400 to be added to the system 100, which can be advantageous if extra resources are needed during a period of peak demand.

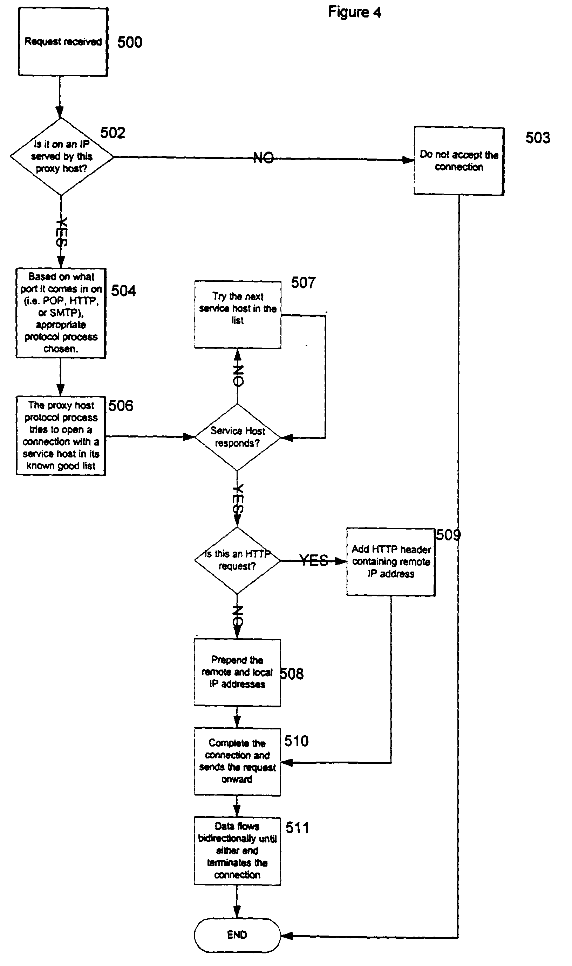

Fig. 4 illustrates a flowchart detailing the operation of the Internet application hosting service system 100 according to the present invention.

Initially, in step 500, a request is made by a remotely located computer on the internet. In step 502, the proxy host 200 determines whether the received request is for, or to, or addressed to an internet (IP) address serviced by the system 100, called a "local" IP address hereinafter. In this regard, associated with step 502 is a table of local IP addresses that correspond to connections that will be accepted. Many thousands of different local IP addresses can be serviced in this manner. If the message is not addressed to a local IP address supported by the service hosting system 100, as identified in the table associated with the proxy host, the connection is not accepted, as illustrated by step 503. Further, the proxy host 200 only accepts communications corresponding to the supported protocols, thereby preventing unauthorised access to other resources. In this sense, the proxy host behaves as a firewall.

In step 504, the proxy host 200 directs the request to the proxy process for the appropriate protocol based on the logical port on which the request came in. Thus, for each supported protocol, there is a separate software instantiation that is used to establish a connection, and each separate software instantiation is called as needed, depending upon the type of message that is received. Thus, a POP instantiation, a HTTP instantiation, and a SMTP instantiation exist for the functional illustration of the proxy host 200 illustrated in Fig 2. The software instantiations for each process are protocol independent, but are distinct for each protocol. Further, such software instantiations can be based upon conventional software, which software needs to be modified in order to take into account the functionalities described herein.

In step 506, the process on the proxy host serving the requested protocol accepts the communication with the remote client and attempts to establish a corresponding connection with a service host 400 using the selected software instantiation for that particular protocol.

The steps that are then taken by each selected software instantiation for each of the protocols and the proxy host 200, except for the HTTP protocol, will now be described. Thereafter, differences between the HTTP protocol steps and the steps for the other protocols will be described.

After having initiated the appropriate protocol process, the proxy host 200 sends in step 506 a request for service to a specific service host 400. This allows the service host 400, which is uniquely identified with only a single IP address (and which is different from any of the local IP addresses), to communicate with proxy host 200, and that proxy host 200 then to communicate with the remotely located computer. In this way, the service hosting system 100 can serve the many thousands of local IP addresses (which are in the table associated with the proxy host 200 as previously discussed), by using service hosts that have only a single IP address associated therewith.

The manner in which the proxy host 200 determines which service host 400 to use will now be described with reference to Fig. 3 previously described. Specifically, a service host 400 that is presently at the top of the known good list 222 will be attempted. If a connection with the first service host 400 cannot be made, the next service host 400 in the list is attempted (step 507). This continues until a service host responds to the particular proxy host 200 sending the request to the effect that a connection can be made.

If the request can be completed, and the request is not an HTTP protocol request, then the proxy host 200 completes the connection in step 508. It does this by sending a connection command that identifies both the local IP address for which the request is being made by the remotely located computer and the remote IP address of the remotely located computer to the selected service host. (The local IP address is the unique internet address of a particular domain that is being hosted as a function of the invention and to which the remotely located computer wishes to connect, as described previously.) Then in step 510, the proxy host sends the data contained in the original request made by the remote computer.

The proxy process continues to relay data bi-directionally between the service host and the remotely located computer (step 511) until either terminates the connection.

As mentioned previously, the process identified above was directed specifically to all protocols other than HTTP, and that modifications of the above-described process were needed for the HTTP process. With respect to an HTTP connection, the same steps identified above take place, except that instead of proceeding to step 508 and sending a message that includes both the local IP address and the remote IP address before beginning to relay data, an HTTP header is included in step 509 containing the remote IP address as part of the data stream and then the process moves to step 510.

Still furthermore, each of the proxy hosts 200 records in a log all connections accepted from the Internet, the number of simultaneous connections being relayed at any given time, and the movement of service hosts 400 from the good list 222 to the bad list 224.

While the present invention has been described herein with reference to particular embodiments thereof, a latitude of modification, various changes and substitutions are intended in the foregoing disclosure, and it will be appreciated that in some instances some features of the invention will be employed without a corresponding use of other features without departing from the scope of the invention as set forth in the appended claims.

## Claims

1. Apparatus (100) for establishing internet communications using any of a plurality of predetermined protocols between any of a plurality of remote computers and one of a plurality of servers (400), said apparatus (100) comprising:
a communication interface for receiving incoming communications from the remotely located computers, each incoming communication being based on one of the plurality of different protocols; and,
a processor (200) capable of processing each of the incoming communications received by the communication interface, establishing a first connection with the remotely located computer associated with each connection, and establishing a second connection with one of a plurality of said servers (400), wherein the processor (200) uses a different instantiation of software to process each incoming communication based upon a different one of the plurality of predetermined protocols so that for each incoming communication, further communications between said associated remotely located computer and said server (400) can take place.

2. Apparatus according to claim 1, wherein certain of said instantiations of software cause, after said second connection is established, a command that identifies an IP address of the remotely located computer and an IP address associated with the apparatus to be issued.

3. Apparatus according to claim 1 or claim 2, comprising a memory that stores a first table (222) that identifies each of the plurality of servers (400) available for establishing the second connection and a second table (220) that identifies a master list of the plurality of servers (400), wherein the first table (222) contains a list of known good servers that is a subset of the master list, and wherein there is further included a third table (224) that identifies a list of known bad servers (400), which list of known bad servers is a subset of the master list that includes those servers not identified on the first table (222).

4. Apparatus according to claim 3, wherein the first, second and third tables (222,220,224) are created for each of the plurality of predetermined protocols.

5. Apparatus according to any of claims 1 to 4, wherein the plurality of predetermined protocols includes POP, SMTP and HTTP protocols.

6. A method of establishing a communication link between a remotely located computer and one of a plurality of service hosts using a proxy host, the method comprising the steps of:
receiving an incoming communication from a remotely located computer at said proxy host;
establishing a first connection between the remotely located computer and the proxy host;
selecting one of a predetermined plurality of software instantiations to use to process each incoming communication based upon which one of a plurality of predetermined protocols each incoming communication is based upon; and,
processing each incoming communication using said selected software instantiation to establish a second connection between the proxy host and one of the plurality of service hosts.

7. A method of establishing a communication link between a remotely located computer and one of a plurality of service hosts using a proxy host, the method comprising the steps of:
receiving an incoming communication from a remotely located computer at said proxy host;
establishing a first connection between the remotely located computer and the proxy host;
determining whether an IP address associated with said incoming communication is supported, said step of determining comparing the IP address associated with said incoming communication to a plurality of predetermined local IP addresses; and,
processing each incoming communication to establish a second connection between the proxy host and one of the plurality of service hosts, each of said plurality of services hosts having associated therewith only a single IP address, each said single IP address being different from the plurality of predetermined local IP addresses.

8. A method according to claim 6 or claim 7, wherein said step of processing causes, after said second connection is established, a command that identifies an IP address of the remotely located computer and the local IP address to be transmitted to the service host for certain ones of said predetermined protocols.

9. A method according to claim 8, wherein said command is transmitted as a first command after said second connection has been established.

10. A method according to any of claims 6 to 9, wherein said certain ones of said predetermined protocols include POP and SMTP protocols.

11. A method according to any of claims 6 to 10, wherein said step of processing causes, after said second connection is established, a command that identifies an IP address of the remotely located computer and an HTTP header to be transmitted to the service host for an HTTP protocol.

12. A method according to any of claims 6 to 11, wherein said step of processing includes selecting one of the plurality of service hosts from a first table that identifies each of the plurality of service hosts available for establishing the second connection; and further including the step of moving, for each service host identified on the first table that could not be used to create the second connection, that service host from the first table to a second table, such that the first table contains a list of known good service hosts and the second table identifies a list of known bad service hosts.

13. A method according to claim 12, wherein the step of selecting one of the plurality of service hosts and the step of moving are independent for each of the plurality of predetermined protocols.

14. A method according to any of claims 6 to 13, wherein the plurality of predetermined protocols include POP, SMTP and HTTP protocols.
